# EUROPÄISCHE PATENTSCHRIFT

(11) **EP 3 382 338 B1**
(45) Veröffentlichungstag und Bekanntmachung des Hinweises auf die Patenterteilung: **04.03.2020**
(21) Anmeldenummer: 18163930.3
(22) Anmeldetag: 26.03.2018
(51) Int. Cl.: G01C 15/00, E04F 21/24

(54) **LAGESENSOR**
POSITION SENSOR
CAPTEUR DE POSITION

(30) Priorität: 30.03.2017 AT 502532017
(43) Veröffentlichungstag der Anmeldung: 03.10.2018
(73) Patentinhaber: Döberl, Egon, 4264 Grünbach (AT)
(72) Erfinder: Döberl, Egon, 4264 Grünbach (AT)
(74) Vertreter: Burgstaller, Peter

(56) Entgegenhaltungen:
- US-A1- 2004 071 509

## Beschreibung

Die Erfindung betrifft einen Lagesensor zur Detektion der Ausrichtung des Lagesensors bezüglich einer Laserreferenzebene.

Bekannte derartige Lagesensoren an Gegenständen nutzen beispielsweise einen Liniensensor, welcher die Position des Schnittpunkts mit der Laserlinie entlang der Erstreckung des Liniensensors detektiert. Bei waagrechter Ausrichtung der Laserlinie und senkrechter Ausrichtung des Liniensensors kann die Höhe des Gegenstandes bezüglich der Laserlinie erfasst werden.

Um die senkrechte Ausrichtung des Gegenstandes herzustellen, werden beispielsweise Wasserwaagen eingesetzt.

Aus der AT 514294 B1 ist ein Abziehstab zur Nivellierung von Schüttgut bekannt, welcher eine Vorrichtung zum automatisiert unterstützten Positionieren und Ausrichten des Abziehstabes umfasst, wobei dazu die Vertikalposition und vertikale Ausrichtung des Abziehstabes zu erfassen ist. Bei einer Ausführungsvariante wird die Vertikalposition des Abziehstabes bezüglich einer Referenzebene erfasst, welche von einem Rotationslaser oder Linienlaser aufgespannt sein kann.

Die US 2004/071509 A1 zeigt ein Abziehgerät mit zumindest einem Lasersensor. Der Sensor ist dazu ausgebildet die Lage einer Laserreferenzebene zu detektieren. Ein solcher Sensor weist üblicherweise eine Reihe oder ein zweidimensionales Array aus einzelnen Photosensor auf, sodass aus deren Signalen die Position der Laserline der Laserreferenzebene erkennbar ist.

Die der Erfindung zu Grunde liegende Aufgabe besteht darin, einen Lagesensor bereitzustellen, welcher an einem Abziehstab angebracht werden kann und welcher im Stande ist sowohl seine Vertikalposition, also die Höhendifferenz zur Referenzeben, als auch seine Ausrichtung bezüglich der Referenzebene zu erfassen.

Für das Lösen der Aufgabe wird ein Lagesensor zur Erfassung der Lage einer Laserreferenzebene relativ zum Lagesensor vorgeschlagen, wobei der Lagesensor zumindest einen Rotor und zumindest einen Photosensor aufweist, wobei der Rotor von einem Motor in Rotation versetzt ist, wobei der Rotor beabstandet zu seiner Drehachse
- entweder eine Immissionsfläche aufweist, von welcher auftreffendes Licht der Laserreferenzebene zum Photosensor gelangt,
- oder den Photosensor selbst aufweist, sodass dieser direkt das Licht der Laserreferenzebene detektiert,
wobei sich besagter Photosensor oder besagte Immissionsfläche bei Rotation des Rotors entlang einer Kreisbahn bewegt, wobei der Motor, welcher den Rotor in Drehung versetzt, ein Schrittmotor ist oder ein Servomotor ist oder ein anderer Motor ist, der mit einem Drehgeber kombiniert ist, sodass die Ausrichtung des Rotors aufgrund des bekannten Drehwinkels stets bekannt ist.
Bevorzugt wird ein Servomotor verwendet, da dieser einen Encoder, bzw. Drehgeber beinhaltet. Ein Encoder, bzw. Drehgeber kann aber auch außerhalb des Motorgehäuses an der Motorwelle oder am Rotor selbst vorliegen, sodass zusätzlich zum Motor ein Drehgeber vorhanden ist.

Bevorzugt wird der Lagesensor am oberen Ende bzw. im oberen Endbereich eines Abziehstabs angebracht, sodass mit diesem die vertikale Position und Ausrichtung des Abziehstabs bezüglich einer Referenzebene bzw. Laserreferenzebene, welche bevorzugt durch eine Laserlinie aufgespannt ist, bestimmbar ist. Als Laserlinie ist Laserlicht mit linienförmigem Strahlenquerschnitt zu verstehen, welcher beispielsweise von einem Laser mit Linienoptik stammt.

Beim erfindungsgemäßen Verfahren zur Bestimmung der Position und Ausrichtung des Abziehstabs bezüglich der Laserreferenzebene mithilfe des erfindungsgemäßen Lagesensors wird der Abziehstab zunächst so ausgerichtet, dass die Laserreferenzebene besagte Kreisbahn des besagten Photosensors oder der besagten Immissionsfläche zweimal schneidet, wobei sich die Positionen der beiden Schnittpunkte der Kreisbahn mit der Laserreferenzebene aus den Drehwinkeln des Rotors ergeben, welche dieser zum jeweiligen Zeitpunkt der Detektion der Laserreferenzebene durch den Photosensor aufweist, wobei die Höhe und die Ausrichtung der Laserreferenzebene bezüglich des Lagesensors aus der Position der beiden Schnittpunkte der Kreisbahn mit der Laserreferenzebene berechenbar ist.

Die Erfindung wird an Hand von Zeichnungen veranschaulicht:
- Fig. 1:: zeigt einen ersten erfindungsgemäßen Lagesensor in senkrechter Ausrichtung in einer ersten Vertikalposition bezüglich einer Laserlinie.
- Fig. 2:: zeigt den ersten erfindungsgemäßen Lagesensor in senkrechter Ausrichtung in einer zweiten Vertikalposition bezüglich einer Laserlinie.
- Fig. 3:: zeigt den ersten erfindungsgemäßen Lagesensor in schräger Ausrichtung in einer ersten Vertikalposition bezüglich einer Laserlinie.
- Fig. 4:: zeigt den ersten erfindungsgemäßen Lagesensor in schräger Ausrichtung in einer zweiten Vertikalposition bezüglich einer Laserlinie.
- Fig. 5:: zeigt eine zweite Ausführungsvariante eines erfindungsgemäßen Lagesensors.
- Fig. 6:: zeigt eine dritte Ausführungsvariante eines erfindungsgemäßen Lagesensors.
- Fig. 7:: zeigt eine vierte Ausführungsvariante eines erfindungsgemäßen Lagesensors in Ansicht von vorne und von der Seite.

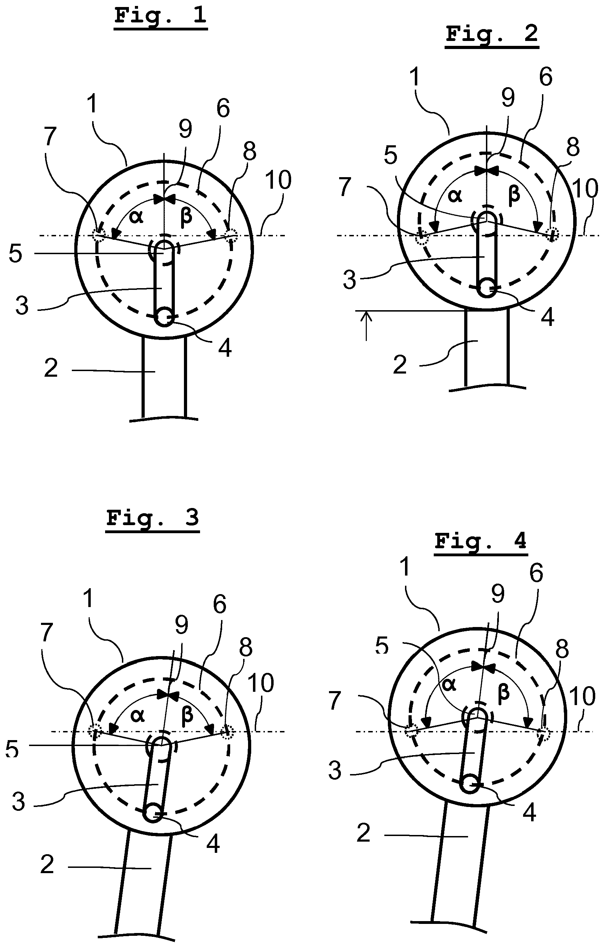

Fig. 1 zeigt einen Lagesensor 1 für einen Abziehstab 2, welcher aus einem rotierenden Lichtwellenleiter 3 gebildet ist, der beabstandet zur Drehachse eine Immissionsfläche 4 aufweist, an welcher auftreffendes Laserlicht in den Lichtwellenleiter 3 eingekoppelt wird, wobei besagte Immissionsfläche 4 bei Rotation des Lichtwellenleiters 3 entlang einer Kreisbahn 6 bewegt wird, wobei die Laserlinie 10 besagte Kreisbahn 6 zumindest zweimal schneidet, wobei die Höhe und die Ausrichtung der Laserlinie 10 bezüglich des Lagesensors 1 aus der Position der beiden Schnittpunkte 7, 8 der Kreisbahn 6 berechenbar ist, wobei die Positionen der Schnittpunkte 7, 8 dadurch detektiert werden, indem das Licht an einer Emissionsfläche 5 des Lichtwellenleiters 3 in bzw. Nahe der Drehachse freigesetzt wird und dort von einem Photosensor detektiert wird, wobei der Motor, welcher den Lichtwellenleiter 3 in Drehung versetzt ein Schrittmotor ist oder einen Encoder aufweist, sodass die Ausrichtung des Lichtwellenleiters 2 zum Zeitpunkt des Auftreffens von Laserlicht bekannt ist.

Aus der Position der beiden Schnittpunkte 7, 8 ergibt sich der Verlauf der Laserlinie 10, welche durch beide Schnittpunkte 7, 8 verläuft. Da die Positionen der beiden Schnittpunkte 7, 8 bezüglich einer Referenzposition 9 bekannt sind, ist die Ausrichtung und Position der Laserlinie 10 bezüglich der Referenzposition 9 bestimmbar. Der Verlauf der Laserlinie 10 und somit die Lage und Ausrichtung des Abziehstabs 2 kann pro Umdrehung des Lichtwellenleiters 3 einmal bestimmt werden. Die Drehzahl des Lichtwellenleiters 3 ist bevorzugt konstant. Sollte bei einer Umdrehung nur ein Schnittpunkt mit der Laserlinie 10 detektiert werden, so liegt diese tangential an der Kreisbahn 6 an. Wird kein Schnittpunkt detektiert, befindet sich die Laserlinie 10 außerhalb der Kreisbahn 6 und somit außerhalb des Messbereichs des Lagesensors 1.

In Folge wird der Ablauf der Positionsbestimmung anhand Fig. 1 Schritt für Schritt beschrieben. Ausgehend von der dargestellten, senkrecht nach unten weisenden Position des Lichtwellenleiters 3 wird dieser beispielsweise im Uhrzeigersinn rotiert. Die Ausrichtung des Lichtwellenleiters 3 ist zu jedem Zeitpunkt bekannt, da dieser von einem Schrittmotor gedreht wird, oder die Drehachse des Lichtwellenleiters 3 mit einem Encoder bzw. eine Drehgeber (Inkrementalgeber oder Absolutwertgeber) versehen ist. Insbesondere ist dadurch die momentane Winkelposition des Lichtwellenleiters 3 bezüglich einer Ausgangs- bzw. Referenzposition 9 bekannt. Die Referenzposition 9 kann der Nullpuls bzw. die Referenzmarke eines Inkrementalgebers sein, oder ein beliebig definierter Wert eines Absolutwertgebers, oder eine definierte Position eines Schrittmotors. Beispielsweise liegt die Referenzposition 9 bei senkrechter Ausrichtung des Abziehstabs 2 senkrecht über der Drehachse des Lichtwellenleiters 3.

Bei Bewegung des Lichtwellenleiters 3 im Uhrzeigersinn schneidet dessen Immissionsfläche 4 zunächst die Laserlinie 10 am Schnittpunkt 7, sodass das Laserlicht durch den Lichtwellenleiter 3 zu dessen Emissionsfläche 5 geleitet wird und dort auf einen nicht dargestellten Photosensor trifft. Sobald der Photosensor das Laserlicht detektiert, wird die aktuelle Winkelposition des Lichtwellenleiters 3 bezüglich der Referenzposition 9 gespeichert. Bei weiterer Bewegung des Lichtwellenleiters 3 im Uhrzeigersinn schneidet dessen Immissionsfläche 4 das nächste Mal die Laserlinie 10 am Schnittpunkt 8, sodass wieder das Laserlicht durch den Lichtwellenleiter 3 zu dessen Emissionsfläche 5 geleitet wird und dort auf den Photosensor trifft. Sobald der Photosensor das Laserlicht detektiert, wird die aktuelle Winkelposition des Lichtwellenleiters 3 bezüglich der Referenzposition 9 wiederum gespeichert.

Dadurch stehen die Winkelpositionen beider Schnittpunkte 7, 8 bezüglich der Referenzposition 9 zur Verfügung, sodass die Ausrichtung des Lagesensors 1 und somit auch des damit fest verbundenen Abziehstabs 2 berechenbar ist.

Wie in Fig. 1 veranschaulicht sind bei senkrechter Ausrichtung des Abziehstabs 2 die beiden Winkel α und β, welche jeweils zwischen einem der Schnittpunkte 7, 8 und der Referenzposition 9 eingeschlossen sind, betragsmäßig ident.

Beispielseise ist die in Fig. 1 dargestellte Position die Sollposition des Lagesensors 1 bezüglich der Laserlinie 10.

In Fig. 2 ist der Lagesensor 1 mit einer gegenüber der Fig. 1 veränderten Vertikalposition bezüglich der Laserlinie 10 dargestellt. Die Ausrichtung des Abziehstabs 2 ist in Fig. 2 ebenfalls senkrecht. Die beiden Winkel α und β sind auch in Fig. 2 betragsmäßig ident zueinander, jedoch ist die Summe der Winkel α und β der Fig. 2 größer als die Summe der Winkel α und β in Fig. 1.

Die Richtung und das Ausmaß der Abweichung der vertikalen Position des Lagesensors 1 in Fig. 2 gegenüber der Sollposition in Fig. 1 kann aus der Richtung (kleinere oder größere Summe der Winkel α und β) und dem Ausmaß der Winkeländerung berechnet werden.

Wenn die in Fig. 1 dargestellte Position und Ausrichtung des Abziehstabs 2 bezüglich der Laserlinie 10 dessen Sollposition und Sollausrichtung ist, kann ausgehend vom Zustand der in Fig. 2 dargestellten Position eine Maßnahme gesetzt werden, um den Lagesensor 1 am Abziehstab 2 wieder auf das in Fig. 1 dargestellte Niveau bezüglich der Laserlinie 10 zu bringen. Die Maßnahme kann beispielsweise manuell erfolgen, oder geregelt oder gesteuert durch Betätigung eines Aktuators, welcher den Abziehstab 2 in seiner Höhe verändert.

In Fig. 3 und Fig. 4 ist der Abziehstab 2 in zwei unterschiedlichen Relativpositionen zur horizontalen Laserlinie 10 jeweils aus der Vertikalen gekippt dargestellt. Wie zu erkennen ist, ändert sich bei Verkippen aus der Vertikalen das Größenverhältnis der beiden Winkel α und β zueinander, welche zwischen dem Schnittpunkt 7 und der Referenzposition 9 und dem Schnittpunkt 8 und der Referenzposition 9 eingeschlossen sind. Aus dem Größenverhältnis beziehungsweise dem betragsmäßigen Unterschied der beiden Winkel α und β ist das Ausmaß bzw. der Winkel der Verkippung des Lagesensors 1 bestimmbar. Da die Sollausrichtung des Abziehstabs 2 bezüglich der Laserlinie meist vertikal ist, kann ausgehend von den Zuständen der Fig. 3 und Fig. 4 eine Maßnahme gesetzt werden, um den Abziehstab 2 wieder in die Senkrechte zu bringen. Die Maßnahme kann beispielsweise manuell erfolgen, oder geregelt oder gesteuert durch Betätigung eines Aktuators, welcher den Abziehstab 2 in seiner Ausrichtung verändert. Die Summe der beiden Winkel α und β ist in den Fig. 1 und 3 ident, da das Verkippen aus der Vertikalen um die Drehachse des Lichtwellenleiters 3 erfolgte, sodass die vertikale Position der Drehachse bezüglich der Laserlinie 10 unverändert bleibt.

Sowohl die Ausrichtung der Laserlinie 10 im Raum als auch die Sollposition und Sollausrichtung des Abziehstabs 2 bezüglich der Laserlinie 10 sind im Prinzip frei festlegbar.

Bevorzugt liegt die Laserlinie 10 aber horizontal und der Abziehstab 2 senkrecht zu dieser, sodass mit der am Abziehstab 2 montierten Abziehleiste beispielsweise ein geschütteter Estrich auf eine konstante Höhe gebracht werden kann, zur Errichtung eines ebenen, exakt horizontalen Bodens.

Der Lagesensor 1 umfasst bevorzugt ein Sensorgehäuse, welche die rotierenden Teile vor Berührung und die Sensorik vor Verschmutzung schützt. Das Sensorgehäuse ist bevorzugt nur entlang der Kreisbahn 6 transparent ausgeführt, sodass das Laserlicht nur an der Immissionsfläche 4 in den Lichtwellenleiter 3 gelangen kann. Der Lichtwellenleiter 3 kann auch abseits der Immissionsfläche 4 ein Cladding aufweisen.

Bevorzugt stammt die Laserlinie 10 von einem Linienlaser, dessen Licht moduliert oder codiert ist, sodass dieses im Signal des Photosensors von Umgebungslicht unterscheidbar ist.

Bevorzugt weist das Sensorgehäuse oder der Lichtwellenleiter 3 oder der Photosensor einen optischen Filter auf, welcher möglichst selektiv nur Licht mit der Wellenlänge des verwendeten Linienlasers passieren lässt.

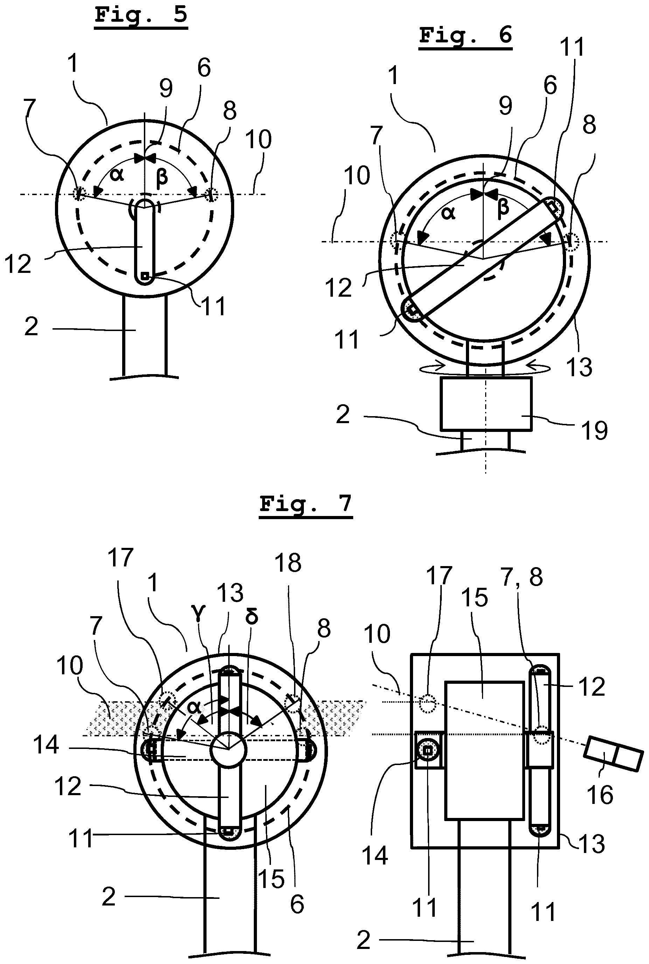

In Fig. 5 ist eine zweite Ausführungsvariante dargestellt, bei welcher anstelle des Lichtwellenleiters 3 ein Rotor 12 verwendet wird, welcher an seinem von der Drehachse entferntem Ende einen Photosensor 11 aufweist. Das Licht der Laserlinie 10 trifft somit an den Schnittpunkten 7 und 8 direkt auf den Photosensor 11. Da der Photosensor 11 ebenso wie bei der ersten Ausführungsvariante das Licht der Laserlinie 10 pro Umdrehung zweimal detektiert, werden wiederum mithilfe eines Winkelgebers an der Welle des Rotors 11 die Winkel α und β bestimmt und daraus die relative Lage des erfindungsgemäßen Lagesensors 1.

In Fig. 6 ist eine dritte Ausführungsvariante dargestellt, bei welcher zwei Photosensoren 11 gegenüberliegend an den beiden Enden eines Rotors 12 angebracht sind, sodass die Winkel α und β pro Umdrehung zweimal gemessen werden können. Vorteilhaft ist, dass der symmetrische Rotor 12 weniger Unwucht erzeugt als der Rotor der Fig. 5. Die beiden Photosensoren 11 sind im Beispiel der Fig. 6 in Lichtwellenleiter, bevorzugt kugelige bzw. halbkugelförmige Lichtwellenleiter, eingesetzt, beispielsweise eingegossen. Die halbkugelförmigen Lichtwellenleiter sind bevorzugt transluzent (streuend lichtdurchlässig), sodass diese eine Streuung des Lichts der Laserlinie 10 bewirken, sodass Anteile des Lichts der Laserlinie 10 unabhängig vom Auftreffwinkel am Lichtwellenleiter auf den Photosensor 11 treffen. Bevorzugt kann der Lichtwellenleiter des Rotors 12 oder der Lichtwellenleiter 3 mit Fluoreszenzstoff dotiert sein, wobei der Fluoreszenzstoff möglichst selektiv nur durch die Wellenlänge des Lichts der Laserlinie 10 anregbar ist. In Fig. 6 ist ein transparentes Gehäuse 13 veranschaulicht, in welchem der Rotor 12 rotiert.

In Fig. 7 ist eine vierte erfindungsgemäße Ausführungsvariante dargestellt, bei welcher die in Fig. 6 dargestellte Variante mit einem zweiten Rotor 14 ergänzt wurde. Die beiden Rotoren 12 und 14 liegen auf einer gemeinsamen Welle, welche von einem Motor 15 angetrieben wird, welcher an der gemeinsamen Welle zwischen den beiden Rotoren 12, 14 angeordnet ist. Bevorzugt überragen die beiden Rotoren 12, 14 das Motorgehäuse radial, sodass eine Abschattung der Laserlinie 10 durch das Motorgehäuse in einem weiten Bereich vermieden wird. Bevorzugt sind die beiden Rotoren 12, 14 um 90° versetzt zueinander ausgerichtet, da so eine Abschattung des Rotors 16 durch den Rotor 14 bzw. umgekehrt vermieden wird. Natürlich könnten die Rotoren 14 und 16 auch eine idente Ausrichtung bezüglich der gemeinsamen Welle aufweisen.

Die Laserlinie 10, welche beispielsweise von einem Linienlaser 16 stammt, verläuft von vorne gesehen (linke Ansicht) horizontal über den Lagesensor 1 und schneidet die Bahn 6 der Photosensoren 11 des vorderen Rotors 12 an den Schnittpunkten 7 und 8. Seitlich (rechte Ansicht) verläuft die Laserlinie 10 jedoch schräg über den Lagesensor 1, was aus den Schnittpunkten 7 und 8 nicht erkennbar ist. Da der zweite Rotor 14 seitlich beabstandet zum ersten Rotor 12 vorliegt schneiden dessen Wellenleiter bzw. Photosensoren 11 die Laserlinie 10 an einem Schnittpunkt 17, welcher höher liegt als die Schnittpunkte 7, 8, beziehungsweise zur Referenzposition 9 einen anderen Winkel γ einschließt als die Winkel α und β der Schnittpunkte 7 und 8. Die von der Laserlinie 10 aufgespannte Referenzeben schneidet den Lagesensor waagrecht, wenn die Winkel α, β und γ ident sind. Je nach Auftreffrichtung der Laserlinie 10 entstehen zumindest drei Schnittpunkte ausgewählt aus den Schnittpunkten 7, 8, 17 und 18, sodass zumindest drei Winkel zur Referenzposition 9 ausgewählt aus den Winkeln α, β, γ und δ zur Verfügung stehen, sodass zumindest drei Punkte der Referenzeben bekannt sind, sodass deren relative Lage zum Lagensensor 1 bestimmbar ist. Auch die Auftreffrichtung der Laserlinie 10 kann näherungsweise bestimmt werden, da abhängig von dieser meist einer der Schnittpunkte 7, 8, 17 oder 18 abgeschattet ist.

Anstelle der Rotoren 12 und 14 der Fig. 7 könnten auch Rotoren 12 gemäß Fig. 4 verwendet werden, oder Lichtwellenleiter 3 gemäß Fig. 1-4.

Eine weitere erfindungsgemäße Ausführungsvariante sieht vor, dass der Lagensensor 1 aktiv um die Längsachse des Abziehstabs 2 drehbar ist, beispielsweise durch einen Schrittmotor oder Servomotor, sodass dieser automatisch bezüglich des Ursprungs der Laserlinie 10 ausrichtbar ist, und bevorzugt auch die Winkelposition des Lagesensors 1 bezüglich der Längsachse des Abziehstabs 2 ermittelbar ist. Dadurch kann die Ausrichtung der Abziehleiste am unteren Ende des Abziehstabs 2 bezüglich des Ursprungs der Laserlinie 10 ermittelt werden.

Bei einer Ausführungsvariante mit nur einem Rotor 12 oder einem rotierenden Lichtwellenleiter 3 kann die seitliche Lage der Laserlinie 10 beziehungsweise die relativ Lage der Referenzebene bezüglich des Lagesensors 1 dadurch erfasst werden, indem der Lagesensor 1 um die Längsachse des Abziehstabs 2 geschwenkt oder gedreht wird. Wenn die Referenzebene den Lagesensor 1 waagrecht schneidet bleiben die Winkel α, β ident und konstant, unabhängig von der Drehung bzw. der Winkelposition des Lagesensors 1 um die Längsachse des Abziehstabs 2. Das Drehen bzw. Schwenken kann durch einen Antrieb 19 erfolgen, wie in Fig. 6 veranschaulicht ist.

Bei der bevorzugten Verwendung wird der Abziehstab 2 von einer Person oder einem Roboter durch den Raum bewegt, wobei beim Abziehvorgang der Abziehstab 2 zur Ausrichtung der Abziehleiste des Öfteren um seine Längsachse geschwenkt und/oder gedreht wird. Auch durch die Bewegung des Abziehstabs durch den Raum ergibt sich eine Relativbewegung zur Quelle der Laserlinie, sodass die Richtung aus welcher die Laserlinie 10 auf den Lagesensor 2 trifft einer ständigen Änderung unterliegt. Daher kann eine konstante senkrechte Ausrichtung des Abziehstabs 2 zur Referenzebene mit einem definierten Relativabstand zu dieser sichergestellt werden, wenn die Winkel α, β während des Abziehvorgangs betragsmäßig ident zueinander gehalten werden und einen konstanten Winkel-Wert aufweisen, welcher dem definierten Relativabstand entspricht.

## Patentansprüche

1. Lagesensor (1) zur Erfassung der Lage einer Laserreferenzebene relativ zum Lagesensor (1), **dadurch gekennzeichnet, dass** der Lagesensor (1) zumindest einen Rotor (12) und zumindest einen Photosensor aufweist, wobei der Rotor (12) von einem Motor in Rotation versetzt ist, wobei der Rotor (12) beabstandet zu seiner Drehachse
- entweder eine Immissionsfläche (4) aufweist, von welcher auftreffendes Licht der Laserreferenzebene zum Photosensor gelangt,
- oder den Photosensor (11) selbst aufweist, sodass dieser direkt das Licht der Laserreferenzebene detektiert,
wobei sich besagter Photosensor (11) oder besagte Immissionsfläche (4) bei Rotation des Rotors (12) entlang einer Kreisbahn (6) bewegt, wobei der Motor, welcher den Rotor (12) in Drehung versetzt ein Schrittmotor oder ein Servomotor ist oder zusätzlich zum Motor ein Drehgeber vorhanden ist, sodass die Ausrichtung des Rotors (12) aufgrund des bekannten Drehwinkels stets bekannt ist.

2. Lagesensor (1) nach Anspruch 1, **dadurch gekennzeichnet, dass** dieser ein Gehäuse aufweist, welches zumindest im Bereich der Kreisbahn (6) in zumindest einem Wellenlängenbereich lichtdurchlässig ist.

3. Lagesensor (1) nach einem der Ansprüche 1 oder 2, **dadurch gekennzeichnet, dass** der Rotor (12) ein Lichtwellenleiter (3) ist, welcher Licht, welches auf seiner Immissionsfläche (4) auftrifft zu seiner Drehachse hin leitet, wo es an einer Emissionsfläche (5) freigesetzt wird und auf einen Photosensor trifft.

4. Lagesensor (1) nach einem der Ansprüche 1 bis 3, **dadurch gekennzeichnet, dass** dieser einen ersten Rotor (12) und einen zweiten Rotor (14) aufweist, welche beabstandet zueinander beidseits des Motors (15) auf einer gemeinsamen Welle liegen.

5. Verwendung eines Lagesensors (1) nach einem der Ansprüche 1 bis 4 für die Bestimmung der Vertikalposition und/oder die Ausrichtung eines Abziehstabs (2) bezüglich einer Laserreferenzebene, wobei der Lagesensor (1) am Abziehstab (2) befestigt ist..

6. Verfahren zur Bestimmung der Position und Ausrichtung eines Abziehstabs (2) bezüglich einer Laserreferenzebene mithilfe eines Lagesensors (1), **dadurch gekennzeichnet, dass** der Lagesensor (1) zumindest einen Rotor (12) und zumindest einen Photosensor aufweist, wobei der Rotor (12) von einem Motor in Rotation versetzt wird, wobei der Rotor (12) beabstandet zu seiner Drehachse
- entweder eine Immissionsfläche (4) aufweist, von welcher auftreffendes Licht der Laserreferenzebene zum Photosensor gelangt,
- oder den Photosensor (11) selbst aufweist, sodass dieser direkt das Licht der Laserreferenzebene detektiert,
wobei besagter Photosensor (11) oder besagte Immissionsfläche (4) bei Rotation des Rotor (12) entlang einer Kreisbahn (6) bewegt wird, wobei der Motor, welcher den Rotor (12) in Drehung versetzt ein Schrittmotor oder ein Servomotor ist, oder zusätzlich zum Motor ein Drehgeber vorhanden ist, sodass die Ausrichtung des Rotors (12) aufgrund des bekannten Drehwinkels stets bekannt ist, wobei die Laserreferenzebene besagte Kreisbahn (6) zweimal schneidet, wobei sich die Positionen der beiden Schnittpunkte (7, 8) der Kreisbahn (6) mit der Laserreferenzebene aus den Drehwinkeln des Rotors (12) ergeben, welche dieser zum jeweiligen Zeitpunkt der Detektion der Laserreferenzebene durch den Photosensor aufweist, wobei die Höhe und die Ausrichtung der Laserreferenzebene bezüglich des Lagesensors (1) aus der Position der beiden Schnittpunkte (7, 8) der Kreisbahn (6) mit der Laserreferenzebene berechenbar ist.

7. Verfahren nach Anspruch 6, **dadurch gekennzeichnet, dass** das Licht der Laserreferenzebene moduliert oder codiert ist.

8. Verfahren nach einem der Ansprüche 6 bis 7, **dadurch gekennzeichnet, dass** der Photosensor, der Lichtwellenleiter (3) oder ein diesen umgebendes transparentes Gehäuse des Lagesensors (1) einen optischen Filter aufweist, wobei das Licht der Laserreferenzebene in einem Wellenlängenbereich liegt, in welchen der optischen Filter passierbar ist.

9. Verfahren nach einem der Ansprüche 6 bis 8, **dadurch gekennzeichnet, dass** die durch den Lagesensor (1) bestimmte Höhe und Ausrichtung bezüglich der Laserreferenzebene dazu verwendet wird, um die Höhe und horizontale Ausrichtung der Abziehleiste des Abziehstabs (2) konstant zu halten.

## Claims

1. A position sensor (1) for detecting a laser reference plane relative to the position sensor (1), **characterised in that** the position sensor (1) has at least one rotor (12) and at least one photo sensor, wherein the rotor (12) is set in rotation by a motor, the rotor (12) having, spaced apart from its rotational axis,
- either an immission surface (4), from which impinging light of the laser reference plane arrives at the photo sensor,
- or the photo sensor (11) itself such that it directly detects the light of the laser reference plane,
wherein said photo sensor (11) or said immission surface (4) moves on a circular path (6) upon rotation of the rotor (12), wherein the motor which sets the rotor (12) in rotation is a stepper motor or a servomotor or a rotary encoder is present in addition to the motor such that the orientation of the rotor (12) is always known based on the known angle of rotation.

2. The position sensor (1) of claim 1, **characterised in that** it has a housing, which is translucent in at least one wavelength range at least in the area of the circular path (6).

3. The position sensor (1) of any one of claims 1 or 2, **characterised in that** the rotor (12) is an optical waveguide (3), which guides light impinging upon its immission surface towards a rotational axis, where it is released at an emission surface (5) and impinges upon a photo sensor.

4. The position sensor (1) of any one of claims 1 to 3, **characterised in that** it has a first rotor (12) and a second rotor (14), which are located spaced apart from each other on a common shaft on both sides of the motor (15).

5. Use of a position sensor (1) according to any one of claims 1 to 4 for determining the vertical position and/or orientation of a levelling bar (2) with respect to a laser reference plane, wherein the position sensor (1) is attached to the levelling bar (2) .

6. A method for determining the position and orientation of a levelling bar (2) with respect to a laser reference plane by means of a position sensor (1), **characterised in that** the position sensor (1) has at least one rotor (12) and at least one photo sensor, wherein the rotor (12) is set in rotation by a motor, the rotor (12) having, spaced apart from its rotational axis,
- either an immission surface (4), from which impinging light of the laser reference plane arrives at the photo sensor,
- or the photo sensor (11) itself such that it directly detects the light of the laser reference plane,
wherein said photo sensor (11) or said immission surface (4) moves on a circular path (6) upon rotation of the rotor (12), wherein the motor which sets the rotor (12) in rotation is a stepper motor or a servomotor or a rotary encoder is present in addition to the motor such that the orientation of the rotor (12) is always known based on the known angle of rotation, wherein the laser reference plane intersects with said circular path (2) twice, wherein the positions of the two points of intersection (7, 8) of the circular path (6) with the laser reference plane are determined based on the angles of rotation of the rotor (12) which it has at the respective time of detection of the laser reference plane by the photo sensor, wherein the height and orientation of the laser reference plane with respect to the position sensor (1) can be calculated from the position of the two points of intersection (7, 8) of the circular path (6) with the laser reference plane.

7. The method of claim 6, **characterised in that** the light of the laser reference plane is modulated or coded.

8. The method of any one of claims 6 to 7, **characterised in that** the photo sensor, the optical waveguide (3) or a transparent housing of the position sensor (1) surrounding the same has an optical filter, wherein the light of the laser reference plane is located in a wavelight range into which the optical filter can be passed.

9. The method of any one of claims 6 to 8, **characterised in that** the height and orientation with respect to the laser reference plane as determined by the position sensor (1) is used to keep the height and horizontal orientation of the levelling strip of the levelling bar (2) constant.

## Revendications

1. Capteur de position (1) pour détecter la position d'un plan de référence laser par rapport audit capteur de position (1),
**caractérisé en ce que**
ledit capteur de position (1) présente au moins un rotor (12) et au moins un photocapteur, le rotor (12) étant mis en rotation par un moteur, le rotor (12) présentant, à distance de son axe de rotation,
- soit une surface d'immission (4) à partir de laquelle passe la lumière incidente du plan de référence laser au photocapteur,
- soit le photocapteur (11) lui-même, afin que celui-ci puisse détecter la lumière du plan de référence laser directement,
ledit photodétecteur (11) ou ladite surface d'immission (4) se déplaçant le long d'un trajet circulaire (6) pendant la rotation du rotor (12), le moteur qui met le rotor (12) en rotation étant un moteur pas à pas ou un servomoteur, ou un codeur rotatif étant présent en plus du moteur, de sorte que l'orientation du rotor (12) est toujours connue grâce à l'angle de rotation connu.

2. Capteur de position (1) selon la revendication 1, **caractérisé en ce que** celui-ci présente un boîtier transparent dans au moins une gamme de longueurs d'onde au moins dans la zone du trajet circulaire (6).

3. Capteur de position (1) selon l'une des revendications 1 ou 2, **caractérisé en ce que** le rotor (12) est un guide d'onde optique (3) qui dirige la lumière incidente sur sa surface d'immission (4) vers son axe de rotation où elle est libérée sur une surface d'émission (5) et est incidente sur un photocapteur.

4. Capteur de position (1) selon l'une des revendications 1 à 3, **caractérisé en ce qu'**il présente un premier rotor (12) et un deuxième rotor (14) qui se trouvent à distance l'un de l'autre des deux côtés du moteur (15) sur un arbre commun.

5. Utilisation d'un capteur de position (1) selon l'une des revendications 1 à 4 pour déterminer la position verticale et/ou l'orientation d'un barreau de nivellement (2) par rapport à un plan de référence laser, le capteur de position (1) étant fixé sur le barreau de nivellement(2).

6. Procédé pour déterminer la position et l'orientation d'un barreau de nivellement (2) par rapport à un plan de référence laser au moyen d'un capteur de position (1), **caractérisé en ce que**
ledit capteur de position (1) présente au moins un rotor (12) et au moins un photocapteur, le rotor (12) étant mis en rotation par un moteur, le rotor (12) présentant, à distance de son axe de rotation,
- soit une surface d'immission (4) à partir de laquelle passe la lumière incidente du plan de référence laser au photocapteur,
- soit le photocapteur (11) lui-même, afin que celui-ci puisse détecter la lumière du plan de référence laser directement,
ledit photodétecteur (11) ou ladite surface d'immission (4) se déplaçant le long d'un trajet circulaire (6) pendant la rotation du rotor (12), le moteur qui met le rotor (12) en rotation étant un moteur pas à pas ou un servomoteur ou un codeur rotatif étant présent en plus du moteur, de sorte que l'orientation du rotor (12) est toujours connue grâce à l'angle de rotation connu, le plan de référence laser coupant ledit trajet circulaire (6) deux fois, les positions des deux points d'intersection (7, 8) du trajet circulaire (6) avec le plan de référece laser résultant des angles de rotation du rotor (12) au moment de la détection du plan de référence laser par le photodétecteur, la hauteur et l'orientation du plan de référence laser par rapport au capteur de position (1) étant calculable a partir de la position desdits deux points d'intersection (7, 8) du trajet circulaire (6) avec le plan de référence laser.

7. Procédé selon la revendication 6, **caractérisé en ce que** la lumière du plan de référence laser est modulée ou codée.

8. Procédé selon l'une des revendications 6 à 7, **caractérisé en ce que** le photocapteur, le guide d'ondes optique (3) ou un boîtier transparent du capteur de position (1) qui entoure ledit guide d'ondes optique comporte un filtre optique, la lumière du plan de référence laser étant d'une gamme de longueurs d'ondes avec laquelle elle peut passer à travers le filtre optique.

9. Procédé selon l'une quelconque des revendications 6 à 8, **caractérisé en ce que** la hauteur et l'orientation par rapport au plan de référence laser déterminées par le capteur de position (1) sont utilisées pour maintenir constante la hauteur et l'orientation horizontale de la barre de nivellement du barreau de nivellement (2).
